**Europäisches Patentamt**

**European Patent Office**

**Office européen des brevets**

(11) Veröffentlichungsnummer : **0 110 093**
**B1**

(12) **EUROPÄISCHE PATENTSCHRIFT**

(45) Veröffentlichungstag der Patentschrift :
**19.07.89**

(21) Anmeldenummer : **83110367.6**

(22) Anmeldetag : **18.10.83**

(51) Int. Cl.⁴ : **C 01 B   3/38, C 01 B   3/34,
B 01 J   8/06**

(54) **Vorrichtung zur Erzeugung von Produktgas mit Wasserstoff- und Kohlenoxyde-Gehalten.**

(30) Priorität : **30.11.82 DE 3244252**

(43) Veröffentlichungstag der Anmeldung :
**13.06.84 Patentblatt 84/24**

(45) Bekanntmachung des Hinweises auf die Patenterteilung : **19.07.89 Patentblatt 89/29**

(84) Benannte Vertragsstaaten :
**AT BE CH DE FR GB IT LI NL SE**

(56) Entgegenhaltungen :
**DE–A– 2 709 621
GB–A–   845 401
US–A– 2 529 630
US–A– 3 030 092
US–E–   24 311**

(73) Patentinhaber : **Uhde GmbH
Friedrich-Uhde-Strasse 15
D-4600 Dortmund 1 (DE)**

(72) Erfinder : **Marsch, Hans-Dieter, Dipl.-Ing.
Overhoffstrasse 193
D-4600 Dortmund 76 (DE)**

EP 0 110 093 B1

## Beschreibung

Die Erfindung betrifft eine Vorrichtung zur Herstellung eines Wasserstoff und Kohlenoxyde enthaltenden Produktgases aus einem Kohlenwasserstoff, insbesondere Erdgas und Wasserdampf, enthaltenden Einsatzgases durch katalytische, endotherme Spaltung dieses Einsatzgases in katalysatorgefüllten Reaktionsrohren zu Spaltgas und einer teilweisen Verbrennung des die Reaktionsrohre verlassenden Spaltgases mit Sauerstoff und/oder Sauerstoff enthaltendem Gas. Produktgas der genannten Art dient der Weiterverarbeitung zu Synthesegas, z. B. für die Erzeugung von Methanol oder Ammoniak.

Die Herstellung des Produktgases erfolgt dabei in einem Reaktor, der durch eine Trennwand in zwei Teile geteilt ist, und zwar in eine obere, mit einem Einlaß für das Einsatzgas versehene Kammer, und in eine untere Kammer mit anschließendem Freiraum, wobei der Reaktor Reaktionsrohre, gefüllt mit Katalysator, enthält, die gasdicht in der Trennwand befestigt sind und die sich von der Kammer bis in den Freiraum erstrecken.

Bei einer Vorrichtung zur katalytisch endothermen Spaltung des Einsatzgases ist es erforderlich, die für die Reaktion notwendige Wärmemenge zu erzeugen und über die Reaktionsrohre an das in diesen strömende Einsatzgas zu übertragen. Zu diesem Zweck werden in bekannter Weise die mit Katalysator gefüllten Reaktionsrohre in einer Vielzahl in dem sogenannten Primärreformerofen reihenweise senkrecht angeordnet und über eine Vielzahl von gas- oder ölbefeuerten Brennern in den Ofenwandungen beheizt. Der Primärreformerofen wird heizgasseitig bei Atmosphärendruck betrieben und die Heizgase verlassen den Ofen mit einer Temperatur von etwa 950 °C und gelangen nach weiterem Wärmetausch mit anderen Prozeß- bzw. Hilfsstoffströmen bis auf eine Temperatur von 120 bis 160 °C in den Rauchgaskamin.

Bei der nachfolgenden Teilverbrennung, d. h. bei weiterer Reduzierung des CH4-Gehaltes und evtl. Einbringung von Stickstoff für ein Synthesegas zur Erzeugung von Ammoniak ist es erforderlich, Sauerstoff und/oder ein Sauerstoff enthaltendes Gas, wie z. B. Luft dem Spaltgas zuzugeben. Dies geschieht im sogenannten Sekundärreformer. Der Sekundärreformer enthält Einrichtungen zur Zugabe des Sauerstoffs bzw. der Luft und eine Katalysatorschicht zur weiteren katalytischen Umsetzung von unerwünschten Gaskomponenten im Spaltgas.

Zum Stand der Technik gehören Vorrichtungen zur Durchführung des Dampfreformierverfahrens, die eine indirekte Beheizung der Reaktionsrohre durch unter Druck erzeugte Verbrennungsgase vorsehen, wobei die noch heißen Verbrennungsgase nach Verlassen des Primärreformers in einer Gasturbine entspannt werden, so z. B. nach DE-C-17 92 229, DE-C-20 55 439. Bei den Verbrennungsgasen handelt es sich um Rauchgase, die nach Entspannung und Abkühlung in die Atmosphäre abgegeben werden und damit mit gewissen Spurenverunreinigungen zur Umweltbelastung beitragen. Weiterhin läßt sich der verwertbare untere Wärmeinhalt der Verbrennungsgase bzw. Rauchgase nur mit einem beträchtlichen Aufwand an kostenintensiver Wärmetauscherfläche wirtschaftlich ausnutzen.

Nach US-A-24 311 ist eine Vorrichtung bekannt zur Herstellung von Wasserstoff und Kohlenmonoxyd aus gasförmigen Kohlenwasserstoffen unter Zusatz von gasförmigem Sauerstoff. Der Zusatz von gasförmigem Sauerstoff und seine Vorwärmung erfolgt durch ein Zentralrohr im teilweise mit Katalysator gefüllten Reformerrohr an dessen düsenförmig ausgestalteten Ende. Der Aufbau dieser Vorrichtung in der ausgewiesenen Art beinhaltet ein hohes Maß an betrieblichem Risiko in Bezug auf die Vorwärmung von Sauerstoff zwischen 500° und 1600 °F (260 und 871 °C) mittels eines brennbaren Gases und in Bezug auf die Reaktionszone örtlich in der Düse am Reformerrohrende.

Nach US-A-25 29 630 ist ein Prozeß und eine Vorrichtung zur Herstellung von Synthesegas bekannt, wobei die Vorrichtung aus einem Reformer mit einer Mehrzahl von beheizbaren Reformerrohren besteht, aus dem über eine Leitung das Spaltgas in die Verbrennungskammer geführt wird. Aus der Verbrennungskammer wird das ca. 1.200 °C heiße Produktgas über eine Leitung zurück zum Reformer geführt, um hier die Reformerrohre zu beheizen. Reformer, separate Verbrennungskammer und verbindende Rohrleitungen beinhalten übermäßigen konstruktiven Aufwand und ein hohes Maß an betrieblichem Risiko.

Der Erfindung liegt die Aufgabe zugrunde, eine Vorrichtung für die Erzeugung von Produktgasen mit Wasserstoff- und Kohlenoxydegehalten zu vereinfachen und betriebssicher zu gestalten.

Diese Aufgabe wird erfindungsgemäß dadurch gelöst, daß in einem Reaktor zur Herstellung von Produktgas die untere Kammerwand und/oder der Boden der unteren Kammer Düsenrohre und durchlässige, poröse Keramikplatten zum Freiraum hin aufweisen für die Zufuhr von weiteren Reaktionsmitteln in den Freiraum.

Ein Ausführungsbeispiel der Erfindung ist in den Zeichnungen dargestellt und wird im folgenden näher beschrieben.

Es zeigen :

Fig. 1 Ein Fließbild mit der erfindungsgemäßen Vorrichtung in einem Verfahren mit Erdgas als Einsatzrohstoff zur Verwendung des erzeugten Produktgases in einer Methanolsynthese.

Fig. 2 Die erfindungsgemäße Vorrichtung zur Durchführung des Verfahrens nach Fig. 1.

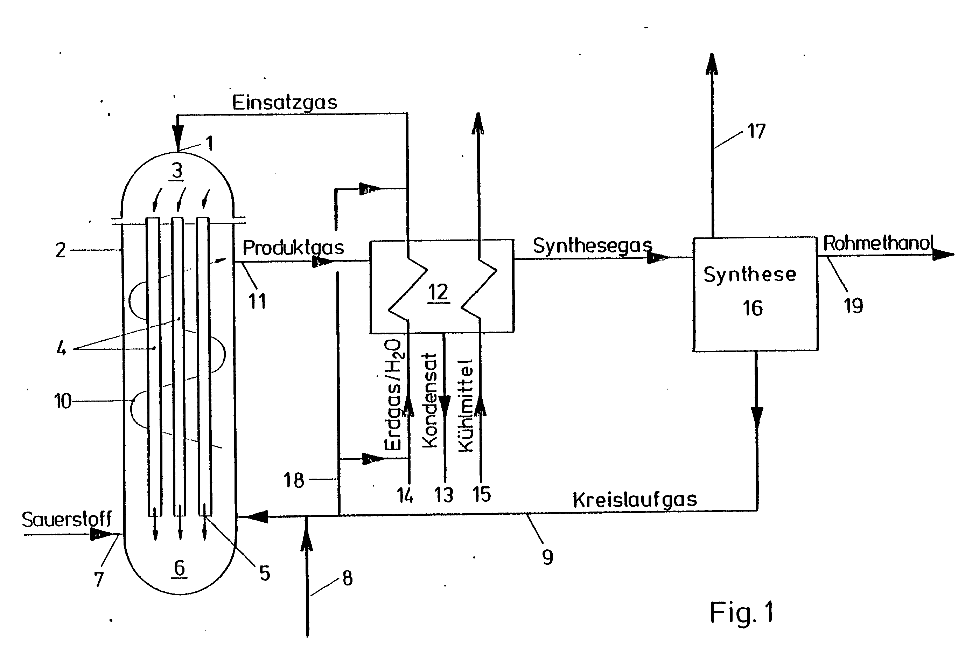

In Fig. 1 tritt das Einsatzprodukt als Erdgas/Dampf-Gemisch bei 1 in den Reaktor 2 ein. In der oberen Kammer 3 wird es auf die mit Katalysator gefüllten Reaktionsrohre 4 verteilt, durchströmt diese unter Wärmeaufnahme und Umwandlung zu einem vorkonditionierten Spaltgas.

Das vorkonditionierte Spaltgas verläßt die Reaktionsrohre 4 am Rohrende 5, um sich in dem Freiraum 6 mit dem dort ebenfalls zugegebenen Oxidationsmittel, im Beispiel Sauerstoff über Leitung 7 und gegebenenfalls Erdgas und Kreislaufgas über die Leitungen 8 und 9 zu mischen und unter Temperaturerhöhung weiter zu reagieren. Die durch diese Reaktion erreichte Wärmetönung dient nun zur Beheizung der Reaktionsrohre 4. Das heiße Produktgas strömt wie angedeutet mit Pfeilen bei 10 im Freiraum mantelseitig im Gegenstrom zur Flußrichtung in den Reaktionsrohren 4 und verläßt den Reaktor 2 am Auslaß 11.

Danach gelangt es in die Kühlstrecke 12, in der insbesondere der Wasserdampf auskondensiert, der über die Leitung 13 abgezogen wird. Die bei der Abkühlung frei werdende Wärme kann auf verschiedene Weise genutzt werden, insbesondere zur Vorwärmung und Überhitzung der Einsatzstoffe Erdgas und Dampf, die über Leitung 14 der Kühlstrecke 12 zugeführt werden.

Zur Schlußkühlung dient ein beliebiges Kühlmittel über Leitung 15, z. B. Wasser, Luft oder auch Sauerstoff, falls eine Aufheizung von niedriger Temperatur erforderlich ist.

Das nahezu wasserfreie Druckgas kann jetzt in einer Syntheseanlage umgesetzt werden, im Beispiel zu Methanol. Da jedes Produktgas inerte Bestandteile enthält, muß aus dem Synthesekreislauf eine bestimmte Gasmenge mit inerten Anteilen über Leitung 17 abgeführt werden. Ein anderer Teil, als Kreislaufgas bezeichnet, wird über Leitung 9 zum Reaktor 2 zurückgeführt. Die Menge des zurückgeführten Kreislaufgases ist abhängig von der Zusammensetzung des Einsatzgases im Reaktor 2 und den eingestellten Reaktionsbedingungen in dem Freiraum 6. Zusätzlich ist vorgesehen, bei Bedarf das Kreislaufgas zumindest teilweise über die Leitung 18 dem Einsatzgemisch zuzugeben. Das Rohmethanol verläßt die Synthese über Leitung 19.

Beim konventionellen Verfahren liegt der Wärmeverbrauch bei ca. 7,9 G cal/t Methanol. Nach dem erfinungsgemäßen Verfahren liegt der Wärmeverbrauch unter 7,1 G cal/t Methanol (1 cal = 4,184 J).

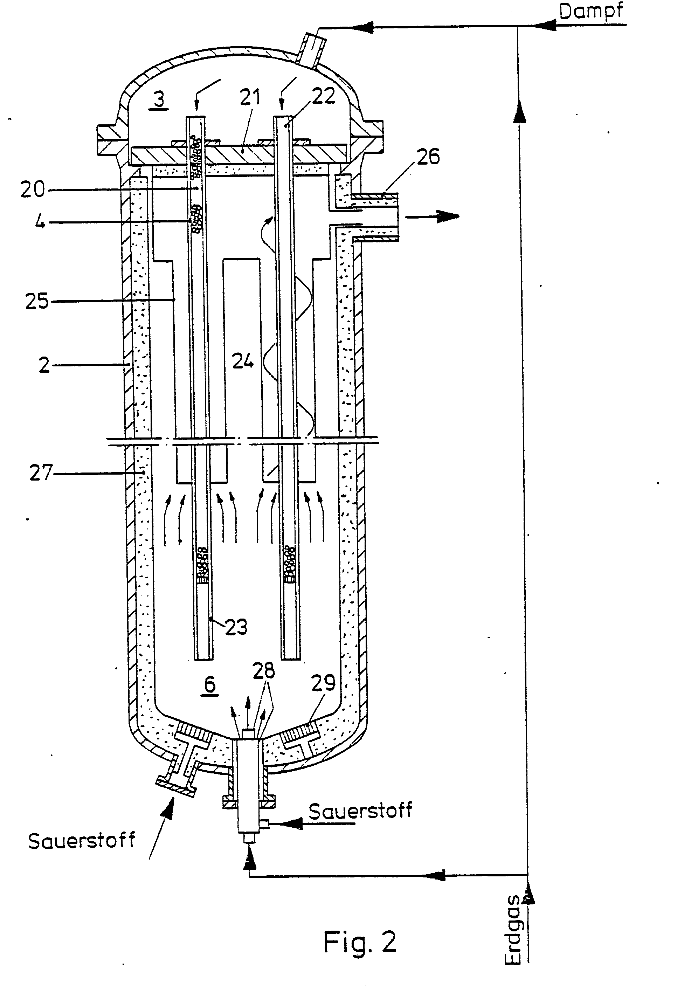

Fig. 2 zeigt eine erfindungsgemäße Vorrichtung zur Durchführung des beschriebenen Verfahrens nach Fig. 1. Der Reaktor 2 enthält eine Vielzahl Reaktionsrohre 4, die mit Katalysator 20 gefüllt sind. Die Reaktionsrohre 4 sind mit der Trennwand 21 dicht verbunden. Das obere Ende 22 ist offen und steht mit der oberen Kammer 3 in Verbindung, während das untere Ende 23 ebenfalls offen ist, und mit der unteren Kammer 24 in Verbindung steht. Damit ist das System Trennwand 21 und Reaktionsrohre 4 druckentlastet. Die Reaktionsrohre 4 sind in ihrem oberen Teil mit Schikanen 25 versehen, die als Hüllrohre dargestellt sind, so daß die weiter erhitzten Spaltgase in Ringspalten geführt werden. Diese Heizgase, die identisch sind mit dem Produktgas, verlassen den Reaktor 2 durch den Stutzen 26. Die untere Kammer 24 des Reaktors 2 einschließlich der Unterseite der Trennwand ist wegen der hohen Temperaturen innenseitig mit einer wärmedämmenden Isolierung oder Ausmauerung 27 versehen. Um den Wärmeübergang auf der Heizgasseite zu erhöhen, können im Bedarfsfall auch andere geeignete Schikanen 25, im Beispiel als Hüllrohre dargestellt, zwischen den Reaktionsrohren eingebaut werden. Diese Schikanen sollten mit den Reaktionsrohren und/oder der Trennwand so verbunden sein, daß sie mit den Reaktionsrohren ein- und ausgebaut werden können. In den Begrenzungswänden des Freiraumes 6 sind Zufuhreinrichtungen für Oxidationsmittel und Kohlenwasserstoff vorgesehen, wobei sowohl einfache Düsenrohre 28 insbesondere für die Zufuhr von Oxidationsmitteln, als auch durchlässige poröse Keramikplatten 29, insbesondere für die Zufuhr von Oxidationsmitteln, vorgesehen sind. Das Düsenrohr 28 wird gleichzeitig so ausgebildet, daß der Reaktor unter Zugabe von Oxidationsmitteln angewärmt und in Betrieb gesetzt werden kann.

Die mit der Erfindung erzielten Vorteile bestehen insbesondere darin, daß die Vorrichtung zur Erzeugung von Produktgas vereinfacht und sie in Bezug auf die Sauerstoff-Zufuhr betriebssicher gestaltet wurde.

## Patentanspruch

Vorrichtung zur Herstellung eines Wasserstoff und Kohlenoxyde enthaltenden Produktgases aus einem Kohlenwasserstoff, insbesondere Erdgas und Wasserdampf, enthaltenden Einsatzgases durch

a) katalytische, endotherme Spaltung diese Einsatzgases in katalysatorgefüllten Reaktionsrohren (4) zu Spaltgas und

b) einer teilweisen Verbrennung des die Reaktionsrohre (4) verlassenden Spaltgases. mit Sauerstoff und/oder Sauerstoff enthaltendem Gas in einem Reaktor (2), der durch eine Trennwand (21) in zwei Teile geteilt ist, und zwar in eine obere, mit einem Einlaß für das Einsatzgas versehene Kammer (3), und in eine untere Kammer (24) mit anschließendem Freiraum (6), wobei der Reaktor Reaktionsrohre (4), gefüllt mit Katalysator, enthält, die gasdicht in der Trennwand (21) befestigt sind und die sich von der Kammer (3) bis in den Freiraum (6) erstrecken, dadurch gekennzeichnet, daß die untere Kammerwand und/oder der Boden der unteren Kammer Düsenrohre (28) und durchlässige, poröse Keramikplatten (29) zum Freiraum hin aufweisen für die Zufuhr von weiteren Reaktionsmitteln in den Freiraum.

## Claim

Device for the generation of a product gas containing hydrogen and carbon oxides from a feedgas consisting substantially of hydrocarbons, particularly natural gas, to which steam is admixed by

a) catalytic endothermic reforming of said feedgas to a product gas in catalyst-filled reaction tubes (4)

b) partial combustion of the reformed gas from the reaction tubes (4) by means of oxygen and/or oxygen-bearing gas in a reactor (2) divided by a partition plate (21) into two discrete sections, an upper chamber (3) containing a feedgas inlet ; and a lower chamber (24) with free space (6) beyond, the reactor containing catalyst-filled reaction tubes (4) attached to the partition plate (21) by a gas-tight seal and extending from the chamber (3) into said space (6) characterized in that the wall of the lower chamber and/or the floor of the lower chamber are equipped with jet tubes (28) and permeable, porous ceramic plates (29) directed towards the free space for the ducting of additional reaction agents into said space.

**Revendication**

Système de production d'un gaz produit contenant de l'hydrogène et des oxydes de carbone, à partir d'un gaz contenant des hydrocarbures, en particulier du gaz naturel et de la vapeur d'eau, par

a) reformage endothermique, catalytique du gaz utilisé comme matière première dans des tubes de réaction (4) remplis de catalyseur et

b) une combustion partielle, à l'aide d'oxygène et/ou d'un gaz contenant de l'oxygène, du gaz ainsi réformé quittant les tubes de réaction (4)

dans un réacteur (2), divisé en deux parties par une cloison (21), à savoir en une chambre supérieure (3) équipée d'une admission du gaz utilisé comme matière première, et en une chambre inférieure (24) avec une zone libre adjacente (6), le réacteur comprenant des tubes de réaction (4) remplis d'un catalyseur, qui sont fixés dans la cloison (21) par une fixation étanche au gaz et s'étendent de la chambre (3) jusque dans la zone libre (6), caractérisé en ce que la paroi inférieure de la chambre et/ou le fond de la chambre inférieure présente(nt) des tuyères (28) et des plaques céramiques poreuses, perméables (29) du côté de la zone libre, pour l'introduction d'autres réactants dans la zone libre.

Rohmethanol

Synthese
16

17

19

Synthesegas

Kreislaufgas

9

12

Kühlmittel 15

Kondensat 13

Erdgas/$H_2O$ 14

Einsatzgas

Produktgas

11

18

8

1

3

5

6

2

4

10

7

Sauerstoff

Fig. 1

Fig. 2